# EUROPÄISCHE PATENTANMELDUNG

(11) **EP 4 491 921 A1**
(43) Veröffentlichungstag der Anmeldung: **15.01.2025**
(21) Anmeldenummer: 24187915.4
(22) Anmeldetag: 11.07.2024
(51) Int. Cl.: F16K 15/18, F16K 31/122, F25B 41/20

(54) **REGELVENTIL FÜR EINEN VERDICHTER EINER WÄRMEPUMPE**

(30) Priorität: 13.07.2023 DE 102023206681
(71) Anmelder: Kermi GmbH, 94447 Plattling (DE)
(72) Erfinder: Breuher, Martin, 84100 Oberaichbach (DE); Albert, Johannes, 94209 Regen (DE)
(74) Vertreter: Patentanwälte Bressel und Partner mbB

(57) **Zusammenfassung**

Die Erfindung betrifft ein Regelventil (1) für einen Verdichter (21) einer Wärmepumpe (20), umfassend: ein Gehäuse (2), einen Saugdruckanschluss (3), einen Heißgaseinlassanschluss (4), einen Heißgasauslassanschluss (5), ein in dem Gehäuse (2) bewegliches Verschlusselement (6) mit einer ersten Wirkfläche (8) und einer zweiten Wirkfläche (9), und ein Federelement (7), wobei das Federelement (7) mit einer Federkraft auf die erste Wirkfläche (8) wirkt, und wobei die erste Wirkfläche (8) ferner dem Saugdruckanschluss (3) zugeordnet ist, sodass ein Saugdruck ebenfalls auf die erste Wirkfläche (8) wirkt, wobei die zweite Wirkfläche (9) dem Heißgaseinlassanschluss (4) zugeordnet ist, sodass ein Druck eines Heißgases auf die zweite Wirkfläche (9) wirkt, und wobei eine an der ersten Wirkfläche (8) wirkende Kraft entgegengerichtet zu einer an der zweiten Wirkfläche (9) wirkenden Kraft ist, wobei das Verschlusselement (6) durch die wirkenden Kräfte derart in dem Gehäuse (2) bewegt werden kann, dass eine Verbindung vom Heißgaseinlassanschluss (4) zum Heißgasauslassanschluss (5) in Abhängigkeit von einer Druckdifferenz zwischen einem Saugdruck und dem Druck des Heißgases verschlossen oder geöffnet wird. Ferner betrifft die Erfindung eine Wärmepumpe (20) und ein Verfahren zum Betreiben eines Verdichters (21) in einer Wärmepumpe (20).

## Beschreibung

Die Erfindung betrifft ein Regelventil für einen Verdichter einer Wärmepumpe. Ferner betrifft die Erfindung eine Wärmepumpe und ein Verfahren zum Betreiben eines Verdichters in einer Wärmepumpe.

Bei Wärmepumpen muss im Betrieb am Verdichter eine Druckdifferenz zwischen einer Saugdruck- oder Niederdruckseite und einer Heißgas- oder Hochdruckseite sichergestellt werden, da der Verdichter über keine Ölpumpe verfügt, sondern differenzdruckgeschmiert ist. Dies bedeutet insbesondere, dass der Hochdruck das Schmieröl in der Exzenterwelle nach oben in einen Verdichterraum drückt und hierdurch die Antriebslager und/oder die Spiralen (eines Scrollverdichters) schmiert. Bricht ein Ölvolumenstrom aufgrund einer mangelnden Druckdifferenz zusammen, so kann es zu einer Mangelschmierung kommen und der Verdichter kann geschädigt werden, bis hin zu einem Totalausfall. Daher muss eine ausreichend große Druckdifferenz zwischen der Saugdruck- oder Niederdruckseite und der Heißgas- oder Hochdruckseite sichergestellt werden.

Der Erfindung liegt die Aufgabe zu Grunde, ein Regelventil für einen Verdichter einer Wärmepumpe zu schaffen, mit dem ein Differenzdruck geregelt werden kann. Ferner sollen eine Wärmepumpe und ein Verfahren zum Betreiben eines Verdichters in einer Wärmepumpe bereitgestellt werden.

Die Aufgabe wird erfindungsgemäß durch ein Verfahren mit den Merkmalen des Patentanspruchs 1, eine Wärmepumpe mit den Merkmalen des Patentanspruchs 9 und ein Verfahren mit den Merkmalen des Patentanspruchs 10 gelöst. Vorteilhafte Ausgestaltungen der Erfindung ergeben sich aus den Unteransprüchen.

Es ist eine Grundidee der Erfindung, ein Regelventil mit einem federbelasteten Verschlusselement zu schaffen, an dem sowohl ein Saugdruck als auch ein Druck eines Heißgases am Verdichter wirken. Das Regelventil ist hierbei insbesondere derart ausgebildet, dass ein sich einstellendes Kräftegleichgewicht zwischen einer durch den Saugdruck hervorgerufenen Kraft und einer Federkraft eines Federelements auf der einen Seite und einer durch den Druck des Heißgases hervorgerufenen Kraft auf der anderen Seite zu einer Bewegung des Verschlusselements führt und hierdurch eine (Fluid-) Verbindung bzw. eine Durchlassöffnung von einem Heißgaseinlassanschluss zu einem Heißgasauslassanschluss zwischen einer Schließstellung und einer Öffnungsstellung gestellt werden kann. Hierbei ist insbesondere vorgesehen, dass eine Zunahme der Druckdifferenz oberhalb eines Wertes, der insbesondere durch die Federkraft vorgegeben wird, zu einem Öffnen des Verschlusselements führt, eine Abnahme der Druckdifferenz unterhalb dieses Wertes hingegen zu einem Schließen.

Insbesondere wird ein Regelventil für einen Verdichter einer Wärmepumpe geschaffen, umfassend ein Gehäuse, einen Saugdruckanschluss, einen Heißgaseinlassanschluss, einen Heißgasauslassanschluss, ein in dem Gehäuse bewegliches Verschlusselement mit einer ersten Wirkfläche und einer zweiten Wirkfläche, und ein Federelement, wobei das Federelement mit einer Federkraft auf die erste Wirkfläche wirkt, und wobei die erste Wirkfläche ferner dem Saugdruckanschluss zugeordnet ist, sodass ein Saugdruck ebenfalls auf die erste Wirkfläche wirkt, wobei die zweite Wirkfläche dem Heißgaseinlassanschluss zugeordnet ist, sodass ein Druck eines Heißgases auf die zweite Wirkfläche wirkt, und wobei eine an der ersten Wirkfläche wirkende Kraft entgegengerichtet zu einer an der zweiten Wirkfläche wirkenden Kraft ist, wobei das Verschlusselement durch die wirkenden Kräfte derart in dem Gehäuse bewegt werden kann, dass eine Verbindung vom Heißgaseinlassanschluss zum Heißgasauslassanschluss in Abhängigkeit von einer Druckdifferenz zwischen einem Saugdruck und dem Druck des Heißgases verschlossen oder geöffnet wird.

Ferner wird insbesondere eine Wärmepumpe geschaffen, umfassend ein Regelventil gemäß einer der in dieser Offenbarung beschriebenen Ausführungsformen, wobei der Saugdruckanschluss mit einer Saugdruck- oder Niederdruckseite des Verdichters verbunden ist, wobei der Heißgaseinlassanschluss mit einer Heißgas- oder Hochdruckseite des Verdichters verbunden ist, wobei der Heißgasauslassanschluss mit einer Heißgasleitung und/oder einem Verflüssiger der Wärmepumpe verbunden ist, wobei das Regelventil hermetisch dicht verschlossen ist.

Weiter wird insbesondere ein Verfahren zum Betreiben eines Verdichters in einer Wärmepumpe zur Verfügung gestellt, wobei ein Differenzdruck zwischen einer Saugdruck- oder Niederdruckseite des Verdichters und einer Heißgas- oder Hochdruckseite des Verdichters mittels eines Regelventils gemäß einer der in dieser Offenbarung beschriebenen Ausführungsformen geregelt wird.

Das Regelventil ermöglicht es, die am Verdichter vorliegende Druckdifferenz zwischen der Saugdruck- oder Niederdruckseite und der Heißgas- oder Hochdruckseite auf einen vorgegebenen Wert zu regeln. Das Regelventil wird hierzu insbesondere in die Heißgasleitung integriert und stellt bzw. regelt einen Volumenstrom des Heißgases. Über diesen Volumenstrom kann insbesondere auch die Druckdifferenz geregelt werden.

Das Regelventil ist im Betrieb technisch hermetisch dicht. Insbesondere sind die Anschlüsse im Betrieb technisch hermetisch dicht ausgebildet. Das Regelventil ist insbesondere für einen Einsatz im kW-Bereich ausgebildet.

Das Verschlusselement weist insbesondere eine Öffnungsstellung und eine Schließstellung auf, wobei Stellungen zwischen der Öffnungsstellung und der Schließstellung insbesondere stufenlos eingestellt werden können. Hierdurch kann ein Querschnitt einer Durchlassöffnung einer (Fluid-)Verbindung zwischen dem Heißgaseinlassanschluss und dem Heißgasauslassanschluss stufenlos eingestellt und/oder geregelt werden.

Insbesondere umfasst das Regelventil ausschließlich den Saugdruckanschluss, den Heißgaseinlassanschluss und den Heißgasauslassanschluss. Ansonsten sind keine weiteren Anschlüsse vorgesehen.

Das Gehäuse umfasst insbesondere einen Gehäusekörper. Das Gehäuse bzw. der Gehäusekörper sind insbesondere rund ausgebildet, insbesondere in Form eines Zylinders, insbesondere eine Hohlzylinders, in dem das Verschlusselement beweglich angeordnet ist. Grundsätzlich kann das Gehäuse auch eine andere Form aufweisen. Der Saugdruckanschluss ist insbesondere an einer Mantelseite (Mantelfläche) des Hohlzylinders angeordnet. Der Heißgaseinlassanschluss ist insbesondere an einer Unterseite des Hohlzylinders angeordnet. Der Heißgasauslassanschluss ist insbesondere ebenfalls an der Mantelseite (Mantelfläche) angeordnet. Eine Ausrichtung des Heißgaseinlassanschlusses zu einer Ausrichtung des Heißgasauslassanschlusses ist mit Bezug auf eine Strömungsrichtung eines durch diese jeweils hindurchtretenden Fluids insbesondere senkrecht zueinander. Durch eine Bewegung des Verschlusselements wird insbesondere der Heißgasauslassanschluss in der Mantelseite (Mantelfläche) durch das Verschlusselement gar nicht, teilweise oder vollständig verdeckt und hierdurch verschlossen oder freigegeben. Insbesondere wird hierbei ein Querschnitt einer Durchlassöffnung des Heißgasauslassanschlusses durch die Bewegung des Verschlusselements verkleinert oder vergrößert.

Die erste Wirkfläche ist insbesondere einer ersten Kammer (d.h. einem Hohlraum) innerhalb des Gehäuses zugeordnet. Die zweite Wirkfläche ist insbesondere einer zweiten Kammer (d.h. einem Hohlraum) innerhalb des Gehäuses zugeordnet. Die erste Kammer und die zweite Kammer sind insbesondere voneinander fluiddicht getrennt auf einander gegenüberliegenden Seiten des Verschlusselements angeordnet. Zur fluiddichten Trennung können ein oder mehrere Dichtelemente zum Einsatz kommen, wie beispielsweise ein Dichtring, der beispielsweise in eine um das Verschlusselement umlaufende Vertiefung oder Nut eingelegt ist. Insbesondere ist der Saugdruckanschluss der ersten Kammer zugeordnet, die Heißgasanschlüsse sind der zweiten Kammer zugeordnet. Durch Ansteigen des Drucks in der ersten Kammer wird das Verschlusselement bei konstantem Druck in der zweiten Kammer insbesondere in Richtung der Schließstellung bewegt. Durch Ansteigen des Drucks in der zweiten Kammer wird das Verschlusselement bei konstantem Druck in der ersten Kammer insbesondere in Richtung der Öffnungsstellung bewegt.

Das Gehäuse kann insbesondere aus einem Metall bestehen oder ein Metall umfassen. Das Verschlusselement kann aus einem Metall oder einem Kunststoff bestehen oder ein Metall oder einen Kunststoff umfassen. Ein Dichtelement kann beispielsweise einen Kunststoff und/oder ein Elastomer umfassen. Ein Druckbereich kann insbesondere bis hin zu 45 bar reichen (abhängig von einem verwendeten Kältemittel).

In einer Ausführungsform ist vorgesehen, dass das Verschlusselement als Kolben ausgebildet ist oder einen Kolben umfasst, wobei der Kolben an einer Seite die erste Wirkfläche aufweist und an einer gegenüberliegenden Seite die zweite Wirkfläche. Der Kolben ist insbesondere in dem Gehäuse oder einem Gehäusekörper des Gehäuses angeordnet. Der Kolben kann durch die auf die Wirkflächen wirkenden Kräfte zwischen der Schließstellung und der Öffnungsstellung stufenlos innerhalb des Gehäuses bewegt werden. Der Kolben ist insbesondere langgestreckt. Der Kolben ist insbesondere zylinderförmig. Eine Bewegung des Kolbens erfolgt insbesondere entlang einer Zylinderachse.

In einer Ausführungsform ist vorgesehen, dass der Kolben an der einen Seite einen Bereich mit einem verringerten Durchmesser aufweist, wobei das Federelement als Schraubenfeder ausgebildet ist, und wobei eine dem Kolben zugewandte Seite des Federelements an und/oder auf dem Bereich angeordnet ist. Hierdurch kann das Federelement besonders einfach an dem Verschlusselement angeordnet und an diesem fixiert werden. Insbesondere kann die Schraubenfeder auf den Bereich aufgesteckt sein bzw. bei der Herstellung aufgesteckt werden. Der verringerte Durchmesser ist insbesondere gegenüber einem Durchmesser des restlichen Kolbens verringert. Ein Durchmesser des Bereichs mit verringertem Durchmesser ist hierbei insbesondere an einen Innendurchmesser der Schraubenfeder angepasst.

In einer Ausführungsform ist vorgesehen, dass eine Federkraft des Federelements derart gewählt ist, dass eine sich durch das Regeln zwischen dem Saugdruck und dem Druck des Heißgases einstellende Druckdifferenz zumindest einer vorgegebenen Mindestdruckdifferenz entspricht. Hierbei kann insbesondere eine Federkonstante des Federelements entsprechend gewählt werden. Weiter kann zu diesem Zweck auch eine Vorspannung des Federelements gewählt sein oder gewählt werden. Die Mindestdruckdifferenz entspricht hierbei insbesondere einem Wert, der für eine Differenzdruckschmierung am Verdichter mindestens notwendig ist. Insbesondere liegt die Mindestdruckdifferenz in einem Bereich zwischen 1,5 und 3 bar. Hierdurch kann in einfacher Weise auf den für eine solche Differenzdruckschmierung notwendigen Mindestdruck geregelt werden.

In einer Ausführungsform ist vorgesehen, dass der Heißgasauslassanschluss eine Verjüngung aufweist. Hierdurch kann ein gegenüber einem kreisrunden Querschnitt feineres Regelverhalten bei einer Stellung des Verschlusselements nahe der Schließstellung erreicht werden. Die Verjüngung bezieht sich insbesondere auf eine Querschnittfläche des Heißgasauslassanschlusses, welche von dem Verschlusselement verschlossen oder freigegeben wird. Insbesondere ist die Richtung der Verjüngung hierbei mit Bezug auf die Schließrichtung des Verschlusselements derart angeordnet, dass sich die Verjüngung in Richtung der Schließstellung verstärkt. Anders ausgedrückt verkleinert sich eine Querschnittsfläche einer Verbindung zwischen dem Heißgaseinlassanschluss und dem Heißgasauslassanschluss bei einer Bewegung des Verschlusselements in Richtung der Schließstellung immer stärker.

In einer Ausführungsform ist vorgesehen, dass der Heißgasauslassanschluss eine V-Form aufweist. Hierdurch kann ein besonders feines Regelverhalten bei einer Stellung des Verschlusselements nahe der Schließstellung erreicht werden. Die V-Form bezieht sich insbesondere auf eine Querschnittfläche des Heißgasauslassanschlusses, welche von dem Verschlusselement verschlossen oder freigegeben wird, wobei der Bereich innerhalb des Vs den Durchlass kennzeichnet. Insbesondere ist die V-Form hierbei mit Bezug auf die Schließrichtung des Verschlusselements derart angeordnet, dass eine Spitze der V-Form in Richtung der Schließstellung zeigt. Anders ausgedrückt verkleinert sich eine Querschnittsfläche einer Verbindung zwischen dem Heißgaseinlassanschluss und dem Heißgasauslassanschluss bei einer Bewegung des Verschlusselements in Richtung der Schließstellung immer stärker.

In einer Ausführungsform ist vorgesehen, dass bei einer vollständigen Schließstellung des Verschlusselements ein vorgegebener Öffnungsspalt zwischen dem Heißgaseinlassanschluss und dem Heißgasauslassanschluss bestehen bleibt. Hierdurch können eine Druckfestigkeitsprüfung (z.B. mit Stickstoff) und/oder ein anschließendes Evakuieren der Heißgasleitung vor einem Befüllen mit einem Kältemittel unterstützt und erleichtert werden, da auch in der vollständigen Schließstellung eine Fluidverbindung zwischen dem Heißgaseinlassanschluss und dem Heißgasauslassanschluss verbleibt, welche zu einem Fluidstrom und einem Ausgleich der Drücke bei den vorgenannten Maßnahmen dient.

In einer Ausführungsform ist vorgesehen, dass das Regelventil ein am Gehäuse angeordnetes Schraubelement aufweist, wobei das Federelement auf einer dem Verschlusselement abgewandten Seite an dem Schraubelement angeordnet ist, derart, dass mittels einer Position des Schraubelements eine Vorspannung des Federelements eingestellt werden kann. Hierdurch kann die Mindestdruckdifferenz auf einfache Weise vorgegeben und eingestellt werden. Dies kann durch Hinein- oder Herausschrauben des Schraubelements insbesondere beim Herstellen der Wärmepumpe erfolgen. Nach dem Einstellen der Position des Schraubelements und der Vorspannung des Federelements, kann das Schraubelement beispielsweise durch Verlöten fixiert und hermetisch dicht ausgestaltet werden. Das Schraubelement kann in Form eines Stopfens in das Gehäuse hineingeschraubt sein. Insbesondere ist das Schraubelement zylinderförmig ausgebildet. Insbesondere weist das Schraubelement ein Außengewinde auf, welches mit einem Innengewinde des Gehäuses oder eines Gehäusekörpers des Gehäuses zusammenwirkt.

Eine Schraubbewegung spannt dann das Federelement, insbesondere eine Schraubenfeder, zum Bereitstellen einer vorgegebenen Federkraft vor.

Nachfolgend wird die Erfindung anhand bevorzugter Ausführungsbeispiele unter Bezugnahme auf die Figuren näher erläutert. Hierbei zeigen:
- Fig. 1: eine schematische Darstellung eines Querschnitts zur Verdeutlichung von Ausführungsformen des Regelventils;
- Fig. 2a bis 2d: weitere schematische Darstellungen zur Verdeutlichung der in der Fig. 1 gezeigten Ausführungsformen;
- Fig. 3a und 3b: schematische Darstellungen zur Verdeutlichung einer Ausführungsform des Regelventils;
- Fig. 4: eine schematische Darstellung zur Verdeutlichung einer Ausführungsform des Regelventils;
- Fig. 5: eine schematische Darstellung zur Verdeutlichung einer Ausführungsform der Wärmepumpe mit dem in dieser Offenbarung beschriebenen Regelventil.

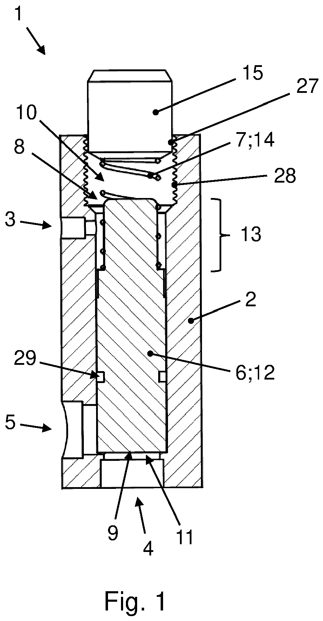

Die Fig. 1 zeigt eine schematische Darstellung eines Querschnitts zur Verdeutlichung von Ausführungsformen des Regelventils 1. Das Regelventil 1 weist ein Gehäuse 2, einen Saugdruckanschluss 3, einen Heißgaseinlassanschluss 4, einen Heißgasauslassanschluss 5, ein bewegliches Verschlusselement 6 und ein Federelement 7 auf.

Der Saugdruckanschluss 3 ist mit Bezug auf die Darstellung in einem oberen Endbereich an einer Seitenfläche des Gehäuses 2 ausgebildet. Der Heißgaseinlassanschluss 4 ist mit Bezug auf die Darstellung an einer Unterseite des Gehäuses 2 ausgebildet und der Heißgasauslassanschluss 5 ist in einem rechten Winkel hierzu in einem unteren Endbereich an einer Seitenfläche des Gehäuses 2 ausgebildet. Der Heißgasauslassanschluss 5 hat insbesondere einen kreisrunden Querschnitt.

Das bewegliche Verschlusselement 6 ist beweglich in dem Gehäuse 2 angeordnet und weist eine erste Wirkfläche 8 und eine zweiten Wirkfläche 9 auf.

Das Federelement 7 wirkt mit einer Federkraft auf die erste Wirkfläche 8. Die erste Wirkfläche 8 ist ferner dem Saugdruckanschluss 3 zugeordnet, sodass ein Saugdruck ebenfalls auf die erste Wirkfläche 8 wirkt.

Die zweite Wirkfläche 9 ist dem Heißgaseinlassanschluss 4 zugeordnet, sodass ein Druck eines Heißgases auf die zweite Wirkfläche 9 wirkt. Eine an der ersten Wirkfläche 8 wirkende Kraft ist entgegengerichtet zu einer an der zweiten Wirkfläche 9 wirkenden Kraft.

Das Verschlusselement 6 kann durch die wirkenden Kräfte derart in dem Gehäuse 2 bewegt werden, dass eine Verbindung vom Heißgaseinlassanschluss 4 zum Heißgasauslassanschluss 5 in Abhängigkeit von einer Druckdifferenz zwischen einem Saugdruck und dem Druck des Heißgases verschlossen oder geöffnet wird.

Insbesondere hat das Gehäuse 2 eine hohlzylinderartige Form. Das Verschlusselement 6 ist derart dimensioniert und in dem Gehäuse 2 angeordnet, dass oberhalb und unterhalb des Verschlusselements 6 eine erste Kammer 10 und eine zweite Kammer 11 in Form von Hohlräumen ausgebildet sind bzw. sich ausbilden lassen. Die erste Kammer 10 ist dem Saugdruckanschluss 3 zugeordnet. In der ersten Kammer 10 herrscht der Saugdruck oder Niederdruck des Verdichters. Die zweite Kammer 11 ist dem Heißgaseinlassanschluss 4 und dem Heißgasauslassanschluss 5 zugeordnet. Die zweite Kammer 11 kann insbesondere durch eine Bewegung des Verschlusselements 6 ausgebildet und/oder vergrößert werden, wobei das Verschlusselement 6 hierzu von einer Schließstellung (Kammervolumen von insbesondere Null) in eine Öffnungsstellung (maximales Kammervolumen der zweiten Kammer 11) bewegt wird. Wird ein Volumen der zweiten Kammer 11 vergrößert, so verkleinert sich ein Volumen der ersten Kammer 10 und umgekehrt. Ist die zweite Kammer 11 ausgebildet, besteht eine Fluidverbindung zwischen dem Heißgaseinlassanschluss 4 und dem Heißgasauslassanschluss 5, sodass das Heißgas von dem Heißgaseinlassanschluss 4 zum Heißgasauslassanschluss 5 gelangen kann.

Es ist insbesondere vorgesehen, dass das Verschlusselement 6 als Kolben 12 ausgebildet ist oder einen Kolben 12 umfasst, wobei der Kolben 12 an einer Seite die erste Wirkfläche 8 aufweist und an einer gegenüberliegenden Seite die zweite Wirkfläche 9. Der Kolben 12 ist insbesondere langgestreckt, wobei der Kolben 12 in dem hohlzylinderförmigen Gehäuse 2 insbesondere derart angeordnet ist, dass dieser entlang einer Längsachse in dem Gehäuse 2 bewegbar ist.

Es kann vorgesehen sein, dass der Kolben 12 an der einen Seite einen Bereich 13 mit einem verringerten Durchmesser aufweist, wobei das Federelement 7 als Schraubenfeder 14 ausgebildet ist, und wobei eine dem Kolben 12 zugewandte Seite des Federelements 7 an und/oder auf dem Bereich 13 angeordnet ist. Insbesondere kann die Schraubenfeder 14 auf den Bereich 13 aufgesteckt sein, sodass ein Teil der Schraubenfeder 14 um den Bereich 13 herumgreift und von dem Bereich 13 fixiert wird. Eine konstante Position des Federelementes 7 kann hierdurch verbessert sichergestellt werden.

Es ist insbesondere vorgesehen, dass das Regelventil 1 ein am Gehäuse 2 angeordnetes Schraubelement 15 aufweist, wobei das Federelement 7 auf einer dem Verschlusselement 6 abgewandten Seite an dem Schraubelement 15 angeordnet ist, derart, dass mittels einer Position des Schraubelements 15 eine Vorspannung des Federelements 7 eingestellt werden kann. Das Schraubelement 15 weist insbesondere ein Außengewinde 27 auf, das mit einem Innengewinde 28 des Gehäuses 2 zusammenwirkt.

Es ist insbesondere vorgesehen, dass eine Federkraft des Federelements 7 derart gewählt ist, dass eine sich durch das Regeln zwischen dem Saugdruck und dem Druck des Heißgases einstellende Druckdifferenz zumindest einer vorgegebenen Mindestdruckdifferenz entspricht. Die Mindestdruckdifferenz entspricht hierbei insbesondere einer Mindestdruckdifferenz, die für eine Differenzdruckschmierung am Verdichter notwendig ist. Die Mindestdruckdifferenz liegt hierbei insbesondere in einem Bereich zwischen 1,5 und 3 bar.

Das Verschlusselement 6, insbesondere der Kolben 12, weist insbesondere eine umlaufende Nut 29 auf, in die ein Dichtelement, insbesondere ein Dichtring (nicht gezeigt), eingelegt ist. Hierdurch kann eine fluiddichte Trennung zwischen der ersten Kammer 10 und der zweiten Kammer 11 sichergestellt werden.

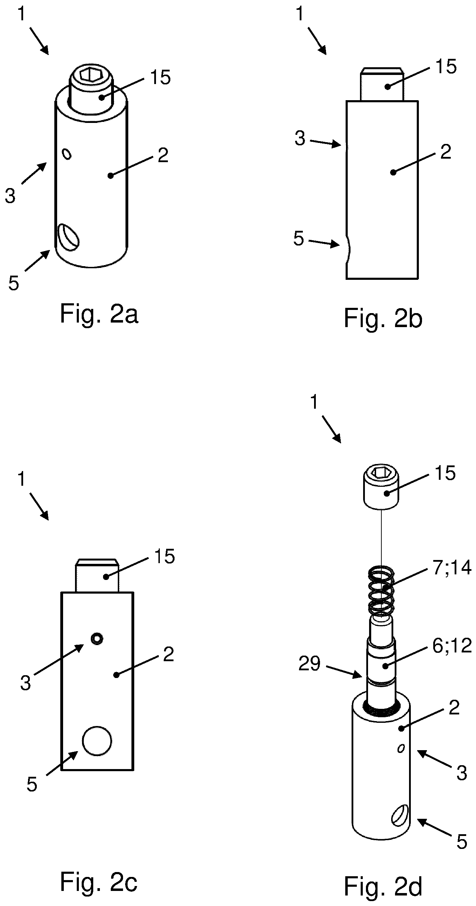

Die Figuren 2a bis 2d zeigen weitere schematische Darstellungen zur Verdeutlichung der in der Fig. 1 gezeigten Ausführungsformen. Hierbei zeigt die Fig. 2a eine perspektivische Darstellung des Regelventils 1, die Figuren 2b und 2c zeigen Seitenansichten des Regelventils 1 und die Fig. 2d eine Explosionsdarstellung des Regelventils 1.

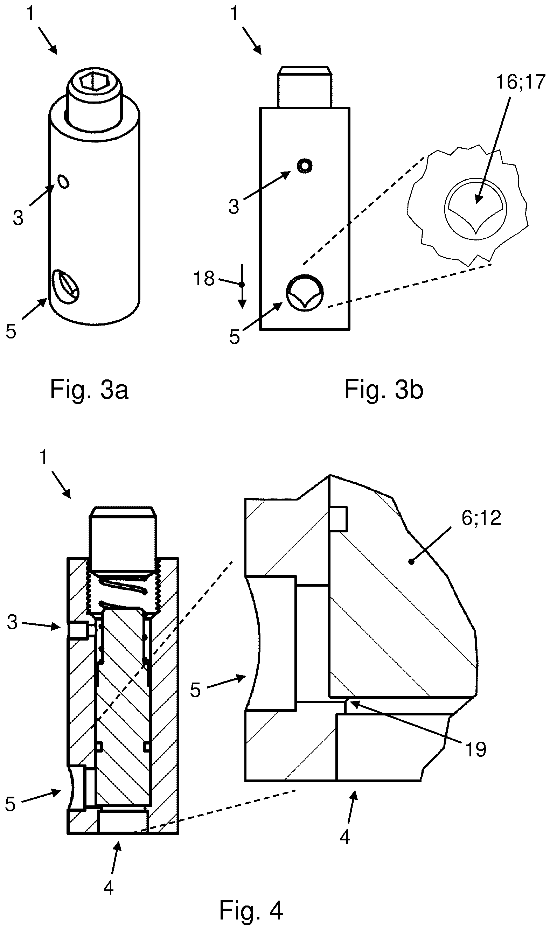

Die Figuren 3a und 3b zeigen schematische Darstellungen zur Verdeutlichung einer Ausführungsform des Regelventils 1. Die Ausführungsform ist grundsätzlich wie die in der Fig. 1 gezeigte Ausführungsform ausgestaltet, gleiche Bezugszeichen bezeichnen gleiche Merkmale und Begriffe. Bei dieser Ausführungsform ist vorgesehen, dass der Heißgasauslassanschluss 5 eine Verjüngung 16 aufweist. Die Verjüngung 16 ist in einer Querschnittsfläche des Heißgasauslassanschlusses 5 ausgebildet. Insbesondere erfolgt die Verjüngung 16 mit Bezug auf eine Schließrichtung 18 des Verschlusselements, das heißt, ein Querschnitt einer Durchlassöffnung in dem Heißgasauslassanaschluss 5 verkleinert sich mit zunehmendem Schließen des Verschlusselements stärker als bei einem kreisrunden Querschnitt. Insbesondere ist vorgesehen, dass der Heißgasauslassanschluss 5 eine V-Form 17 aufweist. Die Spitze des V weist hierbei in die Schließrichtung 18, sodass der Querschnitt der Durchlassöffnung sich nahe der vollständigen Schließstellung insbesondere immer stärker verkleinert.

Die Fig. 4 zeigt eine schematische Darstellung zur Verdeutlichung einer Ausführungsform des Regelventils 1. Die Ausführungsform ist grundsätzlich wie die in der Fig. 1 gezeigte Ausführungsform ausgestaltet, gleiche Bezugszeichen bezeichnen gleiche Merkmale und Begriffe. Bei dieser Ausführungsform ist vorgesehen, dass bei einer vollständigen Schließstellung des Verschlusselements 6 ein vorgegebener Öffnungsspalt 19 zwischen dem Heißgaseinlassanschluss 4 und dem Heißgasauslassanschluss 5 bestehen bleibt. In der gezeigten Ausführungsform beträgt ein Ausmaß des Öffnungsspaltes 19 etwa ein 1 bis 2 % des Ausmaßes in der vollständigen Öffnungsstellung des Verschlusselements 6.

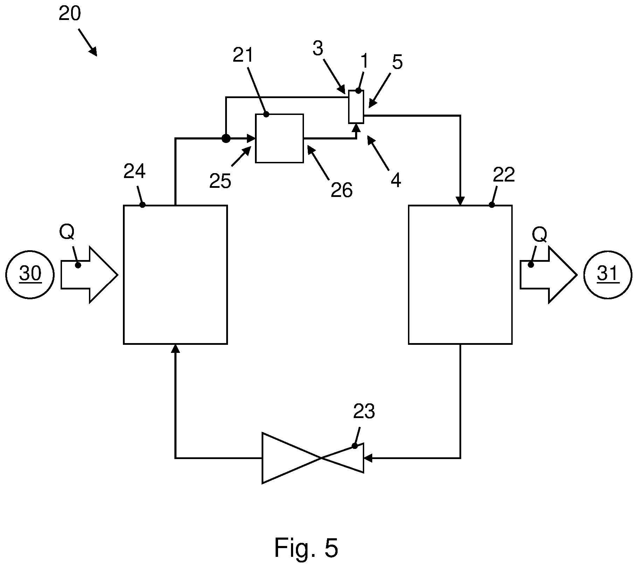

Die Fig. 5 zeigt eine schematische Darstellung zur Verdeutlichung einer Ausführungsform der Wärmepumpe 20 mit dem in dieser Offenbarung beschriebenen Regelventil 1. Die Wärmepumpe 20 umfasst in an sich bekannter Weise einen Verdichter 21, einen Verflüssiger 22, ein Entspannungsventil 23 und einen Verdampfer 24. Ferner umfasst die Wärmepumpe 20 auch eine Steuereinrichtung (nicht gezeigt). Die Wärmepumpe 20 kann insbesondere eine Wärmemenge Q von einer Wärmequelle 30 (Wärmereservoir) zu einer Wärmesenke 31 transportieren, wie dies schematisch in der Fig. 5 angedeutet ist.

Der Saugdruckanschluss 3 des Regelventils 2 ist fluidtechnisch mit einer Saugdruck- oder Niederdruckseite 25 des Verdichters 21 verbunden. Der Heißgaseinlassanschluss 4 ist fluidtechnisch mit einer Heißgas- oder Hochdruckseite 26 des Verdichters 21 verbunden und der Heißgasauslassanschluss 5 ist fluidtechnisch mit einer Heißgasleitung und/oder einem Verflüssiger 22 der Wärmepumpe 20 verbunden ist, wobei das Regelventil 1 hermetisch dicht verschlossen ist. Dies wird insbesondere dadurch erreicht, dass die Verbindungen an den Anschlüssen 3, 4, 5 hermetisch dicht ausgebildet werden, beispielsweise indem diese zusätzlich verlötet werden.

Das Regelventil 2 regelt anhand einer zwischen der Saugdruck- oder Niederdruckseite 25 und der Heißgas- oder Hochdruckseite 26 des Verdichters 21 vorliegenden Druckdifferenz eine Position des Verschlusselements 6 (Fig. 1) und öffnet und schließt hierdurch eine Verbindung zwischen dem Heißgaseinlassanschluss 4 zum Heißgasauslassanschluss 5.

### Bezugszeichenliste

- 1: Regelventil
- 2: Gehäuse
- 3: Saugdruckanschluss
- 4: Heißgaseinlassanschluss
- 5: Heißgasauslassanschluss
- 6: Verschlusselement
- 7: Federelement
- 8: erste Wirkfläche
- 9: zweite Wirkfläche
- 10: erste Kammer
- 11: zweite Kammer
- 12: Kolben
- 13: Bereich
- 14: Schraubenfeder
- 15: Schraubelement
- 16: Verjüngung
- 17: V-Form
- 18: Schließrichtung
- 19: Öffnungsspalt
- 20: Wärmepumpe
- 21: Verdichter
- 22: Verflüssiger
- 23: Entspannungsventil
- 24: Verdampfer
- 25: Saugdruck- oder Niederdruckseite
- 26: Heißgas- oder Hochdruckseite
- 27: Außengewinde
- 28: Innengewinde
- 29: Nut
- 30: Wärmequelle
- 31: Wärmesenke

## Patentansprüche

1. Regelventil (1) für einen Verdichter (21) einer Wärmepumpe (20), umfassend:
ein Gehäuse (2),
einen Saugdruckanschluss (3),
einen Heißgaseinlassanschluss (4),
einen Heißgasauslassanschluss (5),
ein in dem Gehäuse (2) bewegliches Verschlusselement (6) mit einer ersten Wirkfläche (8) und einer zweiten Wirkfläche (9), und
ein Federelement (7), wobei das Federelement (7) mit einer Federkraft auf die erste Wirkfläche (8) wirkt, und
wobei die erste Wirkfläche (8) ferner dem Saugdruckanschluss (3) zugeordnet ist,
sodass ein Saugdruck ebenfalls auf die erste Wirkfläche (8) wirkt,
wobei die zweite Wirkfläche (9) dem Heißgaseinlassanschluss (4) zugeordnet ist,
sodass ein Druck eines Heißgases auf die zweite Wirkfläche (9) wirkt, und
wobei eine an der ersten Wirkfläche (8) wirkende Kraft entgegengerichtet zu einer an der zweiten Wirkfläche (9) wirkenden Kraft ist,
wobei das Verschlusselement (6) durch die wirkenden Kräfte derart in dem Gehäuse (2) bewegt werden kann, dass eine Verbindung vom Heißgaseinlassanschluss (4) zum Heißgasauslassanschluss (5) in Abhängigkeit von einer Druckdifferenz zwischen einem Saugdruck und dem Druck des Heißgases verschlossen oder geöffnet wird.

2. Regelventil (1) nach Anspruch 1, **dadurch gekennzeichnet, dass** das Verschlusselement (6) als Kolben (12) ausgebildet ist oder einen Kolben (12) umfasst, wobei der Kolben (12) an einer Seite die erste Wirkfläche (8) aufweist und an einer gegenüberliegenden Seite die zweite Wirkfläche (9).

3. Regelventil (1) nach Anspruch 2, **dadurch gekennzeichnet, dass** der Kolben (12) an der einen Seite einen Bereich (13) mit einem verringerten Durchmesser aufweist, wobei das Federelement (7) als Schraubenfeder (14) ausgebildet ist, und wobei eine dem Kolben (12) zugewandte Seite des Federelements (7) an und/oder auf dem Bereich (13) angeordnet ist.

4. Regelventil (1) nach einem der vorangegangenen Ansprüche, **dadurch gekennzeichnet, dass** eine Federkraft des Federelements (7) derart gewählt ist, dass eine sich durch das Regeln zwischen dem Saugdruck und dem Druck des Heißgases einstellende Druckdifferenz zumindest einer vorgegebenen Mindestdruckdifferenz entspricht.

5. Regelventil (1) nach einem der vorangegangenen Ansprüche, **dadurch gekennzeichnet, dass** der Heißgasauslassanschluss (5) eine Verjüngung (16) aufweist.

6. Regelventil (1) nach einem der vorangegangenen Ansprüche, **dadurch gekennzeichnet, dass** der Heißgasauslassanschluss (5) eine V-Form (17) aufweist.

7. Regelventil (1) nach einem der vorangegangenen Ansprüche, **dadurch gekennzeichnet, dass** bei einer vollständigen Schließstellung des Verschlusselements (6) ein vorgegebener Öffnungsspalt (19) zwischen dem Heißgaseinlassanschluss (4) und dem Heißgasauslassanschluss (5) bestehen bleibt.

8. Regelventil (1) nach einem der vorangegangenen Ansprüche, **gekennzeichnet durch** ein am Gehäuse (2) angeordnetes Schraubelement (15), wobei das Federelement (7) auf einer dem Verschlusselement (6) abgewandten Seite an dem Schraubelement (15) angeordnet ist, derart, dass mittels einer Position des Schraubelements (15) eine Vorspannung des Federelements (7) eingestellt werden kann.

9. Wärmepumpe (20), umfassend:
ein Regelventil (2) gemäß einem der Ansprüche 1 bis 8, wobei der Saugdruckanschluss (3) mit einer Saugdruck- oder Niederdruckseite (25) des Verdichters (21) verbunden ist, wobei der Heißgaseinlassanschluss (4) mit einer Heißgas- oder Hochdruckseite (26) des Verdichters (21) verbunden ist, wobei der Heißgasauslassanschluss (5) mit einer Heißgasleitung und/oder einem Verflüssiger (22) der Wärmepumpe (20) verbunden ist, wobei das Regelventil (2) hermetisch dicht verschlossen ist.

10. Verfahren zum Betreiben eines Verdichters (21) in einer Wärmepumpe (20), wobei ein Differenzdruck zwischen einer Saugdruck- oder Niederdruckseite (25) des Verdichters (21) und einer Heißgas- oder Hochdruckseite (26) des Verdichters (21) mittels eines Regelventils (1) gemäß einem der Ansprüche 1 bis 8 geregelt wird.
